Europäisches Patentamt

European Patent Office

Office européen des brevets

(19)

(11) **EP 1 510 960 A1**

(12) **EUROPÄISCHE PATENTANMELDUNG**

(43) Veröffentlichungstag:
**02.03.2005 Patentblatt 2005/09**

(51) Int Cl.⁷: **G06K 7/00**

(21) Anmeldenummer: **04006890.0**

(22) Anmeldetag: **23.03.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL LT LV MK**

(71) Anmelder: **Siemens Transit Telematic Systems AG**
**8212 Neuhausen (CH)**

(72) Erfinder: **Roland, Andreas**
**8057 Zürich (CH)**

(74) Vertreter: **Kley, Hansjörg**
**c/o Siemens AG**
**Patentabteilung**
**Postfach 22 16 34**
**80506 München (DE)**

(54) **Verfahren zum Kollisionsmanagement für ein drahtloses Erfassungssystem**

(57) Das Verfahren zum Kollisionsmanagement ist für ein drahtloses Erfassungssystem vorgesehen, das eine Mehrzahl von tragbaren Billetten (B) und wenigstens einem auf einem einer Erfassungszone (20) zugeordneten Terminal (AP) aufweist. Die Billette (B) antworten auf ausgesandte Broadcastmeldungen (B_MSG) mit einer Präsenzmeldung (P_MSG). Zur Vermeidung von Kollisionen ist der Sendezeitpunkt für eine Präsenzmeldung (T_MSG) für jedes Billett (B) durch seine Identität bestimmt und somit individuell. Vom Terminal (AP) erfasste Präsenzmeldungen werden mit einer Bestätigungsmeldung (A_MSG) quittiert. Dennoch auftretende Kollisionen (C) werden vom Terminal (AP) erkannt. Durch eine erneuten Aussendung einer angepassten Broadcastmeldung (B_MSG) werden die noch verbleibenden Billette (B) auf die erfindungsgemässe Weise erfasst.

**Fig 1**

**Fig 2**

**Beschreibung**

Die vorliegende Erfindung betrifft ein Verfahren zum Kollisionsmanagement für ein drahtloses Erfassungssystem nach dem Oberbegriff des Patentanspruchs 1.

Für die Erfassung einer zu beziehenden Leistung, wie z.B. eine Fahrt mit einem öffentlichen Verkehrsmittel, sind Erfassungssysteme bekannt, die eine einen Empfänger in Form einer elektronischen Karte tragende Person, erfassen. Darauf basierend wird zu einem späteren Zeitpunkt eine Fakturierung vorgenommen. Solche Erfassungssysteme können für die Registrierung von Personen in (öffentlichen) Räumen wie z.B. Trams oder Museen oder für die Registrierung von Gegenständen in einer grossen Speditionshalle verwendet werden.

Im Dokument EP 0 642 096 A2 ist ein Erfassungssystem angegeben, das das gleichzeitige Abfragen einer Mehrzahl von tragbaren Empfängern erlaubt. Diese tragbaren Empfänger sind meist als sogenannte Smartcards ausgebildet und bilden die zu erfassenden Einheiten eines elektronische Erfassungssystems.

Solche tragbaren Empfänger kommunizieren bidirektional mit einer im betreffenden Erfassungsraum befindlichen Sende/Empfangseinheit. In diesem Dokument wird der Einfachheit halber folgende Nomenklatur eingeführt:

Sende-/Empfangseinheit :

«Terminal»;

tragbarer Empfänger:

«elektronisches Billett» oder kurz «Billett».

Die Kommunikation zwischen einer Mehrzahl von Billetten und einem Terminal basiert im wesentlichen auf folgenden zwei Schritten:

Ein Terminal sendet mindestens eine «Aufrufmeldung» — auch:

«Broadcastmeldung» genannt - aus, mit der den in der Erfassungszone befindlichen Billetten mitgeteilt wird, dass sie zur Registrierung eine Präsenzmeldung mit Angabe ihrer Identität absetzen können. Daraufhin kann das Terminal die Billette nach Bedarf einzeln adressieren und beispielsweise die empfangene Identität quittieren. Diese zwei Schritte müssen zur Gewährleistung einer lückenlosen Registrierung von Billetten wiederholt werden um eine schlüssige Registrierung und Fakturierung sicherzustellen.

Bedingt durch die Vielzahl von Personen oder Objekten in einem Erfassungsraum - denen je ein Billett zugeordnet ist - und bedingt durch allfällige Überlappungen durch andere, anderen Erfassungszonen zugeordneten Terminals, ergeben sich Kollisionen in der Kommunikation. Solche Überlappungen entstehen z.B. bei zwei unmittelbar nebeneinander stehenden Fahrzeugen des öffentlichen Verkehrs, wo der Fahrgastraum je eine Erfassungszone bildet. Diese auftretenden Kollisionen beeinträchtigen eine sichere und lückenlose Erfassung der Billette. Solche Kollisionen können beispielsweise durch ein Verfahren vermieden werden, bei dem die Terminals und die Billette die Meldungen zu einem Zeitpunkt absetzen, der durch einen Zufallsgenerator festgelegt wird. Ein solches Verfahren setzt voraus, dass die Billette in einer dauernden Empfangsbereitschaft sind.

Das in EP 0 642 096 B1 erwähnte Verfahren «slotted ALOHA» beruht darauf, dass die Billette zu einem von mehreren vorbestimmten Zeitpunkten eine Meldung empfangen und bestätigen können. Die Auswahl eines Zeitpunktes erfolgt durch das Billett. Auch dieses Verfahren setzt voraus, dass die Billette stets empfangsbereit sind.

In einem in WO 99/36877 erwähnten Verfahren reduziert jedes Billett die Wahrscheinlichkeit zur Aussendung von weiteren Präsenzmeldungen soweit, bis keine Kollision mehr feststellbar ist und die Identität erfolgreich abgesetzt werden konnte. Die anderen Billette erhöhen im Anschluss daran die Sendewahrscheinlichkeit wieder soweit, bis entweder ebenfalls die Identität erfolgreich übermittelt werden konnte oder sich erneut eine Kollision ereignet. Solche und ähnliche Verfahren sind unter dem Begriff «Random Access» bekannt.

In WO 99/36877 wird ein Antikollisionsverfahren beansprucht, in dem das vorstehend erwähnte "Wahrscheinlichkeitsverfahren" mit dem «slotted ALOHA»-Verfahren kombiniert ist. Dieses Antikollisionsverfahren beinhaltet die Schritte:

a) ein Terminal sendet eine Broadcastmeldung aus;
b) die in der Erfassungszone befindlichen Billette antworten mit einer Wahrscheinlichkeit kleiner 1 mittels einer Präsenzmeldung, die die Identität des betreffenden Billettes enthält;
c) empfängt das Terminal von einem Billett kollisionsfrei eine Präsenzmeldung, wird vom Terminal eine Kommunikation mit dem betreffenden Billett aufgebaut und anschliessend zum Verfahrensschritt a) zurückgekehrt;
d) empfängt das Terminal von einem Billet eine kollisionsbehaftete Präsenzmeldung wird zum Verfahrensschritt a) zurückgekehrt;

Im Verfahrensschritt b) wird die Wahrscheinlichkeit in Abhängigkeit von durch das Billett bereits beantworteten Broadcastmeldungen verändert.

Dieses Verfahren ist speziell geeignet für sogenannte Proximity-Karten; es setzt während des ganzen Ablaufes eine dauernde Kopplung voraus, da die Speisung solcher Karten in der Regel durch ein H-Feld im sogenannten Nahfeldbereich erfolgt. Dadurch ist auch die Grösse der Erfassungszone begrenzt.

Aus EP 0 902 353 B1 ist eine Anordnung bekannt, die erlaubt, ein elektronisches Billett aus einem energiesparenden Schlafmodus in einen Aktivzustand zu versetzen. Dadurch resultiert ein geringerer Energieverbrauch und ermöglicht somit eine höhere Autonomie.

Eine hohe Autonomie von mit einer Energiequelle versehenen Billetten wird zusätzlich durch einen intermittierenden Betrieb des auf dem Billett befindlichen Sende-/Empfangsmodul erreicht. Das Sende-/Empfangsmodul ist nur in bestimmten Zeitabschnitten zum Empfang einer Meldung eingeschaltet, beispielsweise im Zyklus $t_{CYCL}$ = 10 s für $t_{PSG}$ = 10 ms. Dies ergibt einen sogenannten Duty Cycle von $^1/_{1000}$ und bewirkt einen dementsprechend geringeren Energieverbrauch.

Der intermittierende Betrieb hat zur Folge, dass die Broadcastmeldungen an alle Billette nicht mehr zu einem beliebigen Zeitpunkt erfolgen können, sondern nur noch dann, wenn die auf den Billetten befindlichen Sende-/Empfangsmodule empfangsbereit sind. Dadurch ist die Gefahr von Kollisionen in der Kommunikation wesentlich erhöht. Dies wirkt sich nachteilig auf die innerhalb vorgegebener Zeiten lückenlos zu registrierenden Billette aus.

Im Dokument WO 01/84472 A1 ist ausgehend vom vorgenannten Stand der Technik ein Verfahren zum Kollisionsmanagement angegeben, bei dem die Folgen auftretender Kollisionen wie folgt geheilt werden:

i) von einem Terminal ausgesandte Broadcastmeldung werden zunächst einem weiteren fest der Erfassungszone zugeordneten Quittierungsgerät bestätigt;
ii) bleibt diese Meldung aus, erfolgt die Aussendung einer weiteren Broadcastmeldung;
iii) erhält ein Billett nach einer ausgesandten Präsenzmeldung keine Empfangsbestätigungsmeldung, erfolgt die Aussendung einer weiteren Präsenzmeldung zu einem späteren durch einen Zufallsgenerator festgelegten Zeitpunkt.

Das vorgenannte Verfahren ist mit dem Nachteil des «exponential back-off» behaftet, d.h. bei wiederholten Kollisionen wird der zeitliche Abstand zur weiteren Aussendung einer Präsenzmeldung erhöht, um die Wahrscheinlichkeit von Kollisionen zu vermindern.

Der vorliegenden Erfindung liegt daher die Aufgabe zugrunde ein Verfahren anzugeben, das bei der Kommunikation zwischen einem Terminal und einer Mehrzahl von Billetten auftretende Kollisionen erkennt und den Folgen dieser Kollisionen auf eine systematische und nicht zufällige Art so ausweicht, dass dadurch ein erhöhte Erfassungsrate in einem bestimmten Zeitintervall ermöglicht wird.

Diese Aufgabe wird durch die im Patentanspruch 1 angegebenen Massnahmen gelöst. Vorteilhafte Ausgestaltungen der Erfindung sind in weiteren Ansprüchen angegeben.

Das erfindungsgemässe Verfahren erlaubt die Nutzung des folgenden Sachverhaltes:

Die Anzahl der noch nicht erfassten Billette verringert sich während des Ablaufes und daher nimmt die Kollisionswahrscheinlichkeit pro Versuch ab. Dadurch kann die Häufigkeit der Versuche gesteigert werden, so dass die Kollisionswahrscheinlichkeit pro Zeiteinheit in etwa konstant gehalten werden kann. Diese wiederum führt dazu, dass die Quote erfolgreicher Erfassungsversuch ebenfalls in etwa konstant ist und daher schneller zum Ziel, das heisst zur schnelleren Erfassung aller in einer Erfassungszone befindlichen Billette führt.

In einer besonders vorteilhaften Weiterbildung mit Sendeintervallen, deren Anfangszeitpunkte durch ein Vielfaches eines Grundtaktes mit dem Ergebnis einer

mod p - Operation

erfolgt, ist das Verfahren auf Seite des Terminals vollständig unter Kontrolle und das Terminal braucht nicht auf unwahrscheinlich lange, aber mögliche Antwortzeiten eines einzelnen Billettes zu warten.

Die Erfindung wird nachfolgend anhand der Zeichnung beispielsweise näher erläutert. Dabei zeigen:

Figur 1    Anordnung einer Erfassungszone mit einem zugehörigen Terminal AP und einer Mehrzahl von Billetten B;
Figur 2    Zeitlicher Ablauf der verschiedenen Meldungen bei einer Vollduplex-Übertragung;

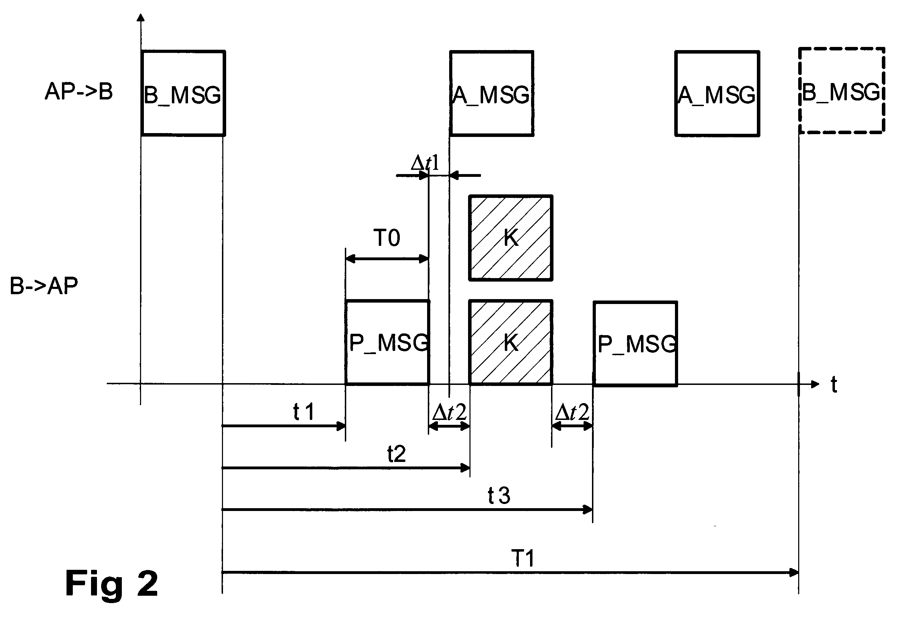

Figur 2    Zeitlicher Ablauf der verschiedenen Meldungen bei einer Semiduplex-Übertragung.

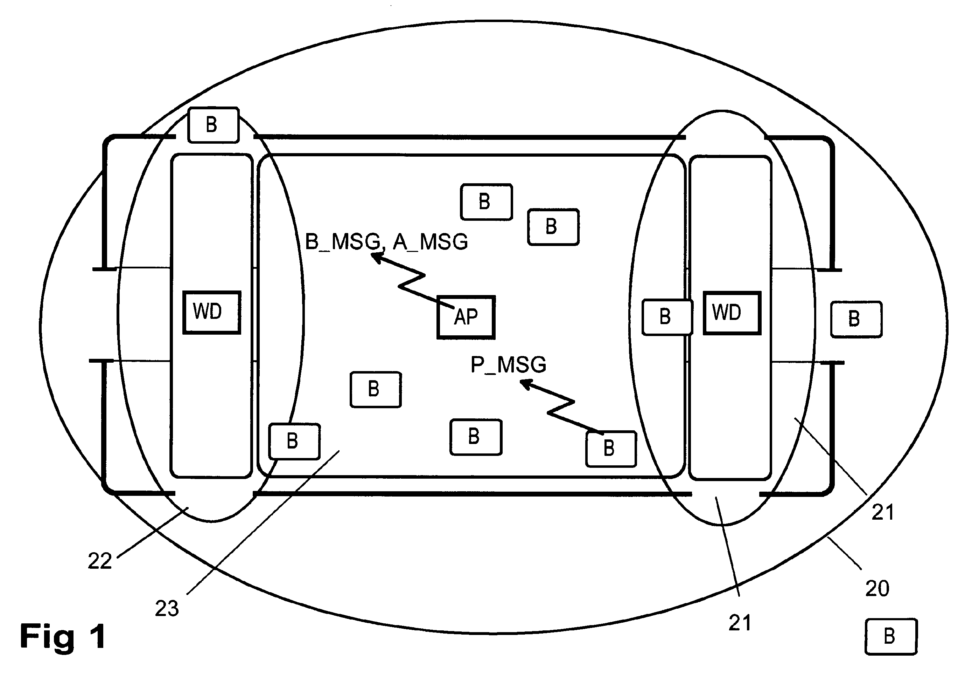

Figur 1 zeigt einen Eisenbahnwagen 24 mit je einem Eingangsbereich 21 und einem Innenraum 23. In der Mitte des Wagens ist ein Terminal AP angeordnet. Durch dieses Terminal AP ist eine Erfassungszone 20 definiert, wobei die Form dieser Erfassungszone in der Figur 1 nicht mit der Realität übereinzustimmen braucht. Personen zugeordnete Billette sind mit dem Bezugszeichen B dargestellt. Den beiden Eingangsbereichen 21 ist je eine Sendeeinheit WD zugeordnet, die eine Weckzone 22 mit einem elektromagnetischen Feld abdecken, das als sogenanntes Nahfeld ausgebildet ist, vorzugsweise ist eine Frequenz von 6.75 MHz oder von 13.5 MHz vorgesehen. Das Aufwecken der Billette bei Eintritt in den Wagen 24 erfolgt durch diese Sendeeinheit WD. Die Reichweite des Aufweckens ist in der Figur als Weckzone 22 eingetragen. Für die weitere Erläuterung eines Ausführungsbeispiels der vorliegenden Erfindung wird angenommen, dass die innerhalb der Erfassungszone 20 befindlichen Billette B durch die Sendeeinheit WD «geweckt» wurden und sich nun in einem intermittierenden Betriebszustand befinden.

Jedes der Billette B besitzt eine numerische Identität, zur Erläuterung werden sechs Billette $B_1$, $B_2$, .., $B_6$ mit der jeweiligen Identität $Id_1$, $Id_2$, .., $Id_6$ angenommen. Alle Zahldarstellungen erfolgen hier im gewöhnlichen Dezimalsystem:

$$Id_1 = 1024$$

$$Id_2 = 1035$$

$$Id_3 = 1036$$

$$Id_4 = 1048$$

$$Id_5 = 1062$$

$$Id_6 = 2057$$

Auf jedem der Billette Bk ist je das Ergebnis der Operation $Id_k$ mod p abgelegt und über einen Index k zugreifbar. Dabei bedeuten:

k        Index zur Indizierung der Billette $B_k$; k = 1, 2,..;
i        Index zur Indizierung der Primzahlen $p_i = p$;
p        Primzahlen, aus Übersichtlichkeitsgründen nicht indizierte Darstellung;
mod      Modulo-Operator oder auch Restfunktion genannt.

Dazu nun folgendes Beispiel in tabellarischer Darstellung für die vorgenannten sechs Identitäten $Id_1$, $Id_2$, .., $Id_6$:

Tabelle 1

| Modulo p Tabelle mit indiziertem Zugriff. | | | | | | | | | | | |
|---|---|---|---|---|---|---|---|---|---|---|---|
| Billett | Id | i | 0 | 1 | 2 | 3 | 4 | 5 | 6 | 7 | 8 |
| | | p | 1 | 2 | 3 | 5 | 7 | 11 | 13 | 17 | 19 |
| B1 | 1024 | | 0 | 0 | 1 | 4 | 2 | 1 | 10 | 4 | 17 |
| B2 | 1035 | | 0 | 1 | 0 | 0 | 6 | 1 | 8 | 15 | 9 |
| B3 | 1036 | | 0 | 0 | 1 | 1 | 0 | 2 | 9 | 16 | 10 |
| B4 | 1048 | | 0 | 0 | 1 | 3 | 5 | 3 | 8 | 11 | 3 |
| B5 | 1062 | | 0 | 0 | 0 | 2 | 5 | 6 | 9 | 8 | 17 |
| B6 | 2057 | | 0 | 1 | 2 | 2 | 6 | 0 | 3 | 0 | 5 |

Für die Identität $Id_1$ = 1024 des Billettes B1 sind die

$Id_1$ mod p

berechneten Werte auf dem Billett B1 abgelegt und entsprechend für die weiteren Billette B2, B3, usw. Bei der Festlegungen der Identitäten kann diese auf die Grundgesamtheit von zu registrierenden Billetten abgestimmt sein und daher kann die kleinste Identität grösser sein als die Mächtigkeit der Grundgesamtheit. Dies ist aber für die Erfindung nicht erforderlich.

Aufgrund der vorstehend aufgeführten Angaben wird der Zeitpunkt des Aussendens einer Präsenzmeldung von einem Billett an ein Terminal AP wie folgt bestimmt:

Vom Terminal AP erfolgt nun innerhalb des beim Wecken vorgegebenen Zeitraster die Aussendung einer generellen Aufrufmeldung AP_MSG; diese wird auch Broadcastmeldung AP_MSG genannt. Die Sendefrequenz ist vorzugsweise im Bereich von 868 MHz oder von 433 MHz. Die Struktur dieser Broadcastmeldung AP_MSG ist in der Tabelle 1 dargestellt; wobei nur diejenigen Felder aufgeführt sind, die für das Verständnis der vorliegenden Erfindung erforderlich sind.

Tabelle 2

| Ausschnitt aus der Struktur einer Broadcastmeldung B_MSG und einer Bestätigungsmeldung A_MSG. | |
|---|---|
| **Feld** | **Erläuterung, Bedeutung, Werte** |
| i | Index zu einer Primzahl. |
| EVENT | Broadcast; Broadcast repeat; receipt acknowledge |
| Dest_ID | Billett ID, O für Broadcast oder bei EVENT=Broadcast wird der Inhalt von Dest_ID ignoriert. |
| : | |

Es sei nun in einem ersten konkreten Beispiel angenommen, dass in der Broadcastmeldung B_MSG der Index i=6 entsprechend der Primzahl 13 gesetzt sei.

Tabelle 3

| Bestimmung des Sendezeitpunktes für den Index i=6. | | | | | | | | | |
|---|---|---|---|---|---|---|---|---|---|
| Billett | Id | i | 0 | 1 | 2 | 3 | 4 | 5 | 6 |
| | | p | 1 | 2 | 3 | 5 | 7 | 11 | 13 |
| B1 | 1024 | | 0 | 0 | 1 | 4 | 2 | 1 | 10 |
| B2 | 1035 | | 0 | 1 | 0 | 0 | 6 | 1 | K8 |
| B3 | 1036 | | 0 | 0 | 1 | 1 | 0 | 2 | K9 |
| B4 | 1048 | | 0 | 0 | 1 | 3 | 5 | 3 | K8 |
| B5 | 1062 | | 0 | 0 | 0 | 2 | 5 | 6 | K9 |
| B6 | 2057 | | 0 | 1 | 2 | 2 | 6 | 0 | 3 |

Die Billette B1 und B6 können mit dem Index 6 und der zugehörigen Primzahl 13 kollisionsfrei eine Präsenzmeldung B_MSG absetzen. Die Sendezeitpunkte t1, t2 werden bestimmt durch

$(T0 + \Delta t2) * r.$

r steht für das Ergebnis aus der Modulo-Operation Id mod P der jeweiligen numerischen Identität Id eines Billettes und Primzahl p. $\Delta t2$ steht für die Einschwingzeit, d.h. einen minimalen zeitlichen Abstand zwischen der Aussendung zweier Präsenzmeldungen von Billetten B. Vom Terminal AP erfolgt nun für korrekt empfangene Präsenzmeldungen P_MSG die Aussendung einer Bestätigungsmeldung A_MSG, die dieselbe Struktur, wie die Broadcastmeldung B_MSG aufweist. Lediglich einzelne Felder sind anders belegt, siehe dazu die Angaben in der vorstehenden Tabelle 2. Die Aussendung der Präsenzmeldungen P_MSG der Billette B2 und B4 und der Billette B3 und B5 kollidieren. Dies ist in der Tabelle 3 mit dem Zeichen «K» gekennzeichnet.

Sowohl das Terminal AP als auch die Billette B können aufgrund des ausgesandten Index 1 - im vorliegenden Fall i=6 - die maximale Dauer T1 eines Zyklus bestimmen. Dazu wird nun auf die Figur 2 Bezug genommen. In Figur 2 wird angenommen, dass das gewählte Übertragungsverfahren voll duplexfähig ist, das heisst, dass Meldungen gleichzeitig in beide Richtungen übertragen werden können. Nach der Aussendung einer Broadcastmeldung B_MSG mit einem bestimmten Index i ist sowohl für das Terminal AP als auch für alle Billette B die maximale Dauer T1 bestimmt; nämlich durch das Produkt

$$(T0 + \Delta t2) * p = T1.$$

p steht dabei für die dem Index i zugehörige Primzahl, im vorliegenden Beispiel ist dies für i=6 die Zahl p=13. $\Delta t2$ steht wie bereits ausgeführt für die Einschwingzeit. Nach Ablauf der Zeitdauer T1 senden jene Billette, die noch keine Bestätigungsmeldung A_MSG erhalten haben, wiederum Präsenzmeldungen P_MSG aus, jedoch diesmal aufgrund des nächstkleineren Index i=5 entsprechend der Primzahl 11. Dadurch ist wiederum allen Billetten B und dem Terminal die maximale Dauer des neuen Zyklus T1 bekannt, nämlich wiederum

$(T0 + \Delta t2) * p$.

Im vorliegenden Beispiel ist dies für i=5 die Primzahl 11. Im nun folgenden zweiten Durchgang mit dem Index 5 und der zugehörigen Primzahl 11 können die verbleibenden Billette B2, B3, B4 und B5 kollisionsfrei eine Präsenzmeldung absetzen; nämlich zu den relativen Zeitpunkten 1, 2, 3 und 6.

In einem zweiten konkreten Beispiel sei angenommen, dass in der Broadcastmeldung B_MSG der Index i = 4 entsprechend der Primzahl 7 gesetzt sei, dazu wird auf die nachfolgende Tabelle 3 Bezug genommen.

Tabelle 4:

| Bestimmung des Sendezeitpunktes für den Index i=4. | | | | | | | |
|---|---|---|---|---|---|---|---|
| Billett | Id | j | 0 | 1 | 2 | 3 | 4 |
| | | p | 1 | 2 | 3 | 5 | 7 |
| B1 | 1024 | | 0 | 0 | 1 | 4 | 2 |
| B2 | 1035 | | 0 | 1 | 0 | 0 | K6 |
| B3 | 1036 | | 0 | 0 | 1 | 1 | 0 |
| B4 | 1048 | | 0 | 0 | 1 | 3 | K5 |
| B5 | 1062 | | 0 | 0 | 0 | K2 | K5 |
| B6 | 2057 | | 0 | 1 | 2 | K2 | K6 |

Die Billette B1 und B3 können mit dem Index 4 und der zugehörigen Primzahl 7 kollisionsfrei eine Präsenzmeldung P_MSG absetzen und erhalten vom Terminal AP eine Bestätigungsmeldung A_MSG. Die kollidierenden Aussendevielfachen sind in der Tabelle 3 wiederum mit dem Zeichen «K» markiert. Nach Ablauf des Zyklus T1 = 7 * (T0+$\Delta t2$) wiederholen die Billette B2, B4, B5 und B6 mit dem Index 3 entsprechend der Primzahl 5 die Aussendung einer Präsenzmeldung P_MSG. Dabei können die Billette B2 und B4 eine Präsenzmeldung P_MSG kollisionsfrei absetzen. In einem dritten Durchgang mit dem Index 2 und der zugehörigen Primzahl 3 können schliesslich die Billette B5 und B6 kollisionsfrei eine Präsenzmeldung absetzen, die ebenfalls mit einer Bestätigungsmeldung A_MSG quittiert wird. Da auf den Billetten B durch Empfang einer Bestätigungsmeldung A_MSG erkannt wird, ob eine Präsenzmeldung P_MSG erfolgreich abgesetzt werden konnte, terminiert dieser Algorithmus auf Seite der Billette ohne weiteres dazutun.

Auftretende Kollisionen werden vom Terminal AP durch eine Schicht 2 Funktion erkannt, z.B. durch einen CRC-Fehler. Auf diese Weise ist im betreffenden Terminal AP stets die Information verfügbar, ob sich in einer Erfassungszone 20 noch Billette B befinden, die aufgrund einer aufgetretenen Kollision noch keine Präsenzmeldung P_MSG absetzen konnten. Durch Aussendung einer erneuten Broadcastmeldung B_MSG und einem Index i können die noch nicht registrierten Billette B erneut aufgefordert werden, gemäss dem vorstehenden Verfahren eine Präsenzmeldung P_MSG abzusetzen. Diese erneute Aufforderung ist in Figur 2 mit einer gestrichelt dargestellten Broadcastmeldung B_MSG angegeben. Diese Broadcastmeldung B_MSG hat wiederum eine Struktur gemäss der Tabelle 2, im Feld Event ist dann die Angabe «Wiederholung» mit z.B. «broadcast repeated» enthalten. Auf diese Weise ist sichergestellt, dass sich nur noch nicht registrierte Billette B am erneuten Senden einer Präsenzmeldung P_MSG beteiligen.

Diese Unterscheidung ist deshalb wichtig, weil es für eine bestimmte Anwendung erforderlich sein kann, zu bestimmten Zeitpunkten oder für bestimmte Ereignisse wiederum feststellen zu müssen, welche Billette B sich noch in der Erfassungszone befinden. Beispielsweise ist dies erforderlich bei öffentlichen Verkehrsmitteln. Dadurch kann dem Inhaber eines solchen Billettes B auch belegt werden, welche Strecken- oder Haltestellenabschnitte er befahren hat und für die ein Entgelt geschuldet ist.

Das Ausführungsbeispiel mit den indiziert abgelegten Primzahlen hat den Vorteil, dass auf dem Billett dadurch wertvolle Rechenkapazität eingespart werden kann. Dies ist auf einem Billett B auch aus Gründen des Energieverbrauchs von besonderer Bedeutung. Ohne Einschränkung der erfindungsgemässen Lösung ist es auch möglich, anstelle des Index i direkt eine Primzahl zu übermitteln. Dabei wäre zusätzlich bei der Modulo-Operation mit der nächstkleineren Primzahl auch noch diese und allenfalls weitere Primzahlen auf dem Billett B zu berechnen.

Im vorstehenden Ausführungsbeispiel wurde angenommen, dass für eine weitere Runde automatisch die nächstkleinere Primzahl p bzw. der nächstkleinere Index i genommen wird, um die Zeitintervalle für die Aussendung einer Präsenzmeldung der noch nicht erfassten Billette zu bestimmen. Es ist auch möglich, dass dieses Verfahren mit lediglich einem Index i bzw. mit einer zugehörigen Primzahl p ausgeführt wird und nach einer solchen Runde dem Terminal AP überlassen wird, wie eine weitere Runde zur Erfassung initiiert wird. Dabei kann ein Algorithmus auf dem Terminal AP den festzulegenden Index i bzw. die zugehörige Primzahl p abhängig von der Anzahl festgestellter Kollisionen und/oder der Anzahl erfasster Billette B und/oder der Anzahl unbenutzter Sendeintervalle bestimmen.

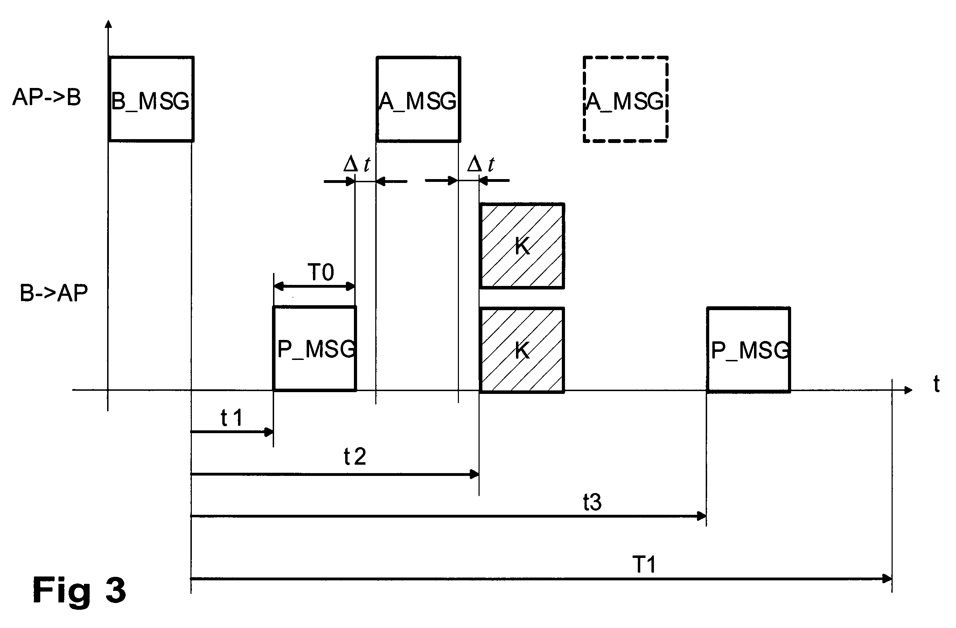

In Figur 3 ist der Ablauf des erfindungsgemässen Verfahrens bei einem Semiduplex-Übertragungsverfahren soweit dargestellt, um die wesentlichen Unterschiede zu erläutern. Bei einem Semiduplexverfahren können zwei Kommunikationspartner nicht echt gleichzeitig Meldungen absetzen. Der Algorithmus zur Bestimmung der Sendezeitpunkte mit der vorstehend genannten Modulo-Operation bleibt davon unberührt. Die Sendezeitpunkte t1, t2 werden bestimmt durch

$$(T0 + \Delta t + T0) * r.$$

r steht für das Ergebnis aus der Modulo-Operation Id mod P der jeweiligen numerischen Identität Id eines Billettes und Primzahl p. Gemäss der Darstellung in Figur 3 wird angenommen, dass die Aussendung der Präsenzmeldung P_MSG zum Zeitpunkt t1 kollisionsfrei erfolgen konnte. Um ein Intervall $\Delta t$ versetzt bzw. verspätet erfolgt durch das Terminal AP die Aussendung einer Bestätigungsmeldung A_MSG. Erst jetzt ist das Übertragungsmedium wieder frei um zu einem Zeitpunkt t2 die Aussendung einer weiteren Präsenzmeldung P_MSG zu ermöglichen. Gemäss der Darstellung in Figur 3 ist angenommen, dass zum Sendezeitpunkt t2 eine Kollision erfolgt. Deshalb ist die anschliessende Bestätigungsmeldung A_MSG gestrichelt dargestellt. Dies kann folgendermassen impelementiert werden:

    i) Es wird vom Terminal nichts ausgesendet oder

    ii) Es wird zwar eine Meldung A_MSG ausgesendet, deren Inhalt weist aber in einem Feld die Information auf: Kollision, Fehler und keine Identität eines Billettes.

Alternativ zur Darstellung in Figur 3 wäre es auch möglich, die Aussendung von Bestätigungsmeldungen A_MSG an das Ende der Periode T1 zu setzen, wobei T1 gleich wie gemäss der Figur 2 berechnet würde. Diese anschliessende quasikontinuierliche Aussendung von Bestätigungsmeldung hat dann die maximale Dauer Anzahl Bestätigungsmeldung multipliziert mit dem Grundtakt T0 bzw T0+$\Delta t2$.

Die vorstehende Anordnung betreffend Sendeeinheit WD und Terminal AP ist lediglich beispielhaft zu verstehen. Wie bereits in EP 1 210 693 B1 offenbart, ist es möglich, eine oder mehrere Sendeeinheiten WD in einem Raum, z.B. Autobus, anzuordnen und die Billette B erst nach Abfahrt des Busses durch ein Nahfeld «aufzuwecken». Erst anschliessend erfolgt dann die Registrierung mit einer Broadcastmeldung B_MSG und das erfindungsgemässe Verfahren zum Kollisionsmanagement erfährt dann eine Anwendung.

Das vorstehende Ausführungsbeispiel mit der Modulo-Operation stellt eine besonders vorteilhafte Ausgestaltung der vorliegenden Erfindung dar. Es ist möglich, auch auf andere Weisen aufgrund der Identität eines Billettes die Sendezeitpunkte t1, t2, .. deterministisch zu bestimmen, beispielsweise durch die vollständige oder partielle Bildung der Quersumme der betreffenden numerischen Identität.

**Liste der verwendeten Bezugzeichen und Bezeichner**

| | |
|---|---|
| 20 | Erfassungszone |
| 21 | Eingangsbereich, Teil der Erfassungszone |
| 22 | Weckzone, Teile der Erfassungszone |
| 23 | Innenraum, Fahrgastraum |
| 24 | Eisenbahnwagen |
| AP | einer Erfassungszone zugeordnete Sende/Empfangseinheit; Terminal, Access Point |
| B | elektronisches Billett |
| C | Kollision |
| CRC | Cyclic Redundancy Check |

WD      Sendeeinheit, Wake up Device

$\Delta t$      Zeitlicher Abstand zwischen Aussendung einer Präsenzmeldung P_MSG und einer zugehörigen Bestätigungsmeldung A_MSG bei einem Semiduplex-Übertraungsverfahren

$\Delta t1$      Zeitlicher Abstand zwischen Aussendung einer Präsenzmeldung P_MSG und einer zugehörigen Bestätigungsmeldung A_MSG bei einem Duplex-Übertraungsverfahren

$\Delta t2$      Einschwingzeit

T0      Grundtakt

T1      Dauer eines Erfassungszyklus, durch p * T0 definiert, wobei p eine Primzahl ist.

P_MSG      Präsenzmeldung, von einem Billett B ausgesandt; «present»

B_MSG      Broadcastmeldung, generelle Aufrufmeldung, von einem Terminal AP ausgesandt; «broadcast»

A_MSG      Bestätigungsmeldung, mit einer Empfängeradresse versehene Meldung; «acknowledge».


**Patentansprüche**

1.  Verfahren zum Kollisionsmanagement für ein drahtloses Erfassungssystem das enthält:

    i) eine Mehrzahl von elektronischen Billetten (B), welche ein Sende-/Empfangsmodul aufweisen;
    ii) wenigstens ein einer Erfassungszone (20) zugeordnetes Terminal (AP);

    wobei die Kommunikation zwischen den Billetten (B) und dem Terminal (AP) mit einer von einem Terminal (AP)
    ausgesandten Broadcastmeldung (B_MSG) initiiert wird und in einem Grundtakt (T0)
    **gekennzeichnet durch** folgende Verfahrensschritte:

    A auf den Empfang der Broadcastmeldung (B_MSG) senden die Billette (B) nach einem **durch** ihre Identität
    (Id) bestimmten Zeitintervall (t1, t2, ..) eine Präsenzmeldung (P_MSG) an das Terminal (AP);
    B das Terminal (AP) quittiert eine empfangene Präsenzmeldung (P_MSG) mit einer die Identität (Id) des betreffenden Billettes (B) enthaltenden Bestätigungsmeldung (A_MSG);

    auftretende Kollisionen in der Kommunikation werden mit dem Verfahrensschritt C behoben:

    C im Verfahrensschritt A erfolgt nach dem Ausbleiben der Bestätigungsmeldung (A_MSG) nach einem weiteren **durch** die Identität (Id) des Billetts (B) bestimmten Zeitintervall (t1, t2) eine Wiederholung der Aussendung der Präsenzmeldung (P_MSG).

2.  Verfahren nach Anspruch 1,
    **dadurch gekennzeichnet, dass**
    im Verfahrensschritt B vom Terminal (AP) entweder eine Bestätigungsmeldung (A_MSG) anschliessend an eine
    korrekt empfangene Präsenzmeldung (P_MSG) ausgesendet wird oder dass vom Terminal (AP) anschliessend
    nach Empfang (T1) von Präsenzmeldungen (P_MSG) Bestätigungsmeldungen (A_MSG) ausgesendet werden.

3.  Verfahren nach Anspruch 1 oder 2,
    **dadurch gekennzeichnet, dass**
    die Identität (Id) eines Billettes (B) durch eine Zahl dargestellt ist.

4.  Verfahren nach Anspruch 3,
    **dadurch gekennzeichnet, dass**
    im Verfahrensschritt A das Zeitintervall (t1, t2, ..) an das Ende des Empfangs der Broadcastmeldung (B_MSG)
    anschliesst.

5.  Verfahren nach einem der Ansprüche 2 bis 3,
    **dadurch gekennzeichnet, dass**
    im Verfahrensschritt A das Zeitintervall (t1, t2, ..) bestimmt wird durch ein Vielfaches eines Grundtaktes (T0,
    T0+$\Delta t2$), wobei das Vielfache bestimmt ist durch das Ergebnis der Operation
        Id mod p
    und Id eine Zahldarstellung der Identität des betreffenden Billettes (B) ist und p eine dem Billett (B) und dem Terminal (AP) bekannte Primzahl ist.

6. Verfahren nach Anspruch 5,
   **dadurch gekennzeichnet, dass**
   die Primzahl in der Broadcastmeldung (B_MSG) den Billetten übermittelt wird.

7. Verfahren nach Anspruch 5,
   **dadurch gekennzeichnet, dass**
   in den Billetten (B) das Ergebnis der Operation Id mod p für eine feste Anzahl Primzahlen gespeichert ist und dass auf die Primzahl (p) und das Ergebnis der Operation Id mod p über einen Index (i) direkt zugegriffen werden kann und dass in der Broadcastmeldung (B_MSG) ein Index (i) zu einer Primzahl übermittelt wird.

8. Verfahren nach einem der Ansprüche 5 bis 7,
   **dadurch gekennzeichnet, dass**
   im Verfahrensschritt C Billette (B), die noch keine Bestätigungsmeldung (A_MSG) erhalten haben, den Verfahrensschritte A mit der nächstkleineren Primzahl wiederholen.

9. Verfahren nach einem der Ansprüche 5 bis 8,
   **dadurch gekennzeichnet, dass**
   bei vom Terminal (AP) erkannten Kollisionen (C) eine weitere Broadcastmeldung (B_MSG) ausgesandt wird.

10. Verfahren nach Anspruch 9,
    **dadurch gekennzeichnet, dass**
    durch eine Angabe in der weiteren Broadcastmeldung (B_MSG) die Verfahrenschritte A und B nur noch für jene Billette (B) ausgeführt wird, die noch keine Bestätigungsmeldung (A_MSG) erhalten haben.

Fig 1

B_MSG, A_MSG

P_MSG

WD

WD

AP

B

B

B

B

B

B

B

B

B

B

B

20

21

21

22

23

EP 1 510 960 A1

AP->B

B_MSG

A_MSG

A_MSG

B_MSG

$\Delta t1$

K

T0

B->AP

P_MSG

K

P_MSG

t

t 1

$\Delta t2$

$\Delta t2$

t2

t 3

T1

**Fig 2**

Fig 3

AP->B

B->AP

B_MSG

A_MSG

A_MSG

$\Delta t$   $\Delta t$

K

T0

P_MSG

K

P_MSG

t 1

t 2

t3

T1

t

EP 1 510 960 A1

**Europäisches**
**Patentamt**

**EUROPÄISCHER RECHERCHENBERICHT**

Nummer der Anmeldung

EP 04 00 6890

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 467 036 A (SAVI TECHN INC) 22. Januar 1992 (1992-01-22) * Spalte 6, Zeile 47 - Spalte 7, Zeile 28; Abbildungen 9,10 * ----- | 1-4 | G06K7/00 |
| X | US 5 539 394 A (CATO ROBERT T ET AL) 23. Juli 1996 (1996-07-23) * Spalte 5, Zeile 29 - Spalte 6, Zeile 30; Anspruch 1 * ----- | 1-4 | |

**RECHERCHIERTE SACHGEBIETE (Int.Cl.7)**

G06K

Der vorliegende Recherchenbericht wurde für alle Patentansprüche erstellt

| Recherchenort | Abschlußdatum der Recherche | Prüfer |
|---|---|---|
| Den Haag | 28. September 2004 | Chiarizia, S |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 00 6890

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-09-2004

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0467036 | A | 22-01-1992 | AT | 134044 | T | 15-02-1996 |
| | | | DE | 69116946 | D1 | 21-03-1996 |
| | | | DE | 69116946 | T2 | 20-06-1996 |
| | | | DK | 467036 | T3 | 11-03-1996 |
| | | | EP | 0467036 | A2 | 22-01-1992 |
| | | | ES | 2082885 | T3 | 01-04-1996 |
| | | | GR | 3019842 | T3 | 31-08-1996 |
| | | | JP | 4232488 | A | 20-08-1992 |
| | | | US | 5640151 | A | 17-06-1997 |
| | | | US | 5528232 | A | 18-06-1996 |
| | | | US | 5686902 | A | 11-11-1997 |
| | | | US | 5973613 | A | 26-10-1999 |
| US 5539394 | A | 23-07-1996 | KEINE | | | |

EPO FORM P0461

Für nähere Einzelheiten zu diesem Anhang : siehe Amtsblatt des Europäischen Patentamts, Nr.12/82